# FASCICULE DE BREVET EUROPEEN

(11) **EP 2 129 452 B1**
(45) Date de publication et mention de la délivrance du brevet: **08.05.2019**
(21) Numéro de dépôt: 08761883.1
(22) Date de dépôt: 14.02.2008
(51) Int. Cl.: B01D 53/94, B01D 53/90

(54) **UTILISATION D'UNE SOLUTION AQUEUSE DANS DES DISPOSITIFS SCR POUR LE TRAITMENT DES GAZ D'ECHAPPEMENT DES MOTEURS DIESEL ET PROCÉDÉ SCR**
VERWENDUNG EINER WÄSSRIGEN LÖSUNG IN SCR-SYSTEMEN ZUR BEHANDLUNG VON DIESELMOTOR-ABGASEN UND SCR-VERFAHREN
USE OF AN AQUEOUS SOLUTION IN SCR SYSTEMS FOR THE TREATMENT OF EXHAUST GASES FROM DIESEL ENGINES AND SCR METHOD

(30) Priorité: 23.02.2007 FR 0701305
(43) Date de publication de la demande: 09.12.2009
(73) Titulaire: TOTAL MARKETING SERVICES, 92800 Puteaux (FR)
(72) Inventeur: SCHMELZLE, Pierre, 42220 Saint Julien Molin Molette (FR); ORO-URREA, Leire, 69006 Lyon (FR); ESCOFFIER, Stéphanie, 69310 Pierre-Benite (FR); DOUCE, Françoise, 69390 Vourles (FR)
(74) Mandataire: Hirsch & Associés
(86) Numéro de dépôt international: PCT/FR2008/000186
(87) Numéro de publication internationale: WO 2008/125745

(56) Documents cités:
- WO-A-96/28380
- WO-A1-00/75643
- US-A- 5 489 419
- US-A- 5 645 756
- US-B1- 6 878 359

## Description

### Domaine technique.

La présente invention concerne l'utilisation d'une solution pour le traitement des gaz d'échappement à la sortie des moteurs Diesel embarqués ou stationnaires. Elle concerne plus particulièrement l'utilisation dans les dispositifs SCR pour le post-traitement des gaz d'échappement.

### Contexte technique et art antérieur.

Les normes européennes en matière de pollution pour les carburants Diesel, en particulier celles applicables aux véhicules poids lourds, ont permis d'influer sur une diminution effective et significative des émissions nocives pour l'environnement. Tout d'abord avec les phases EURO2 et EURO3, les paramètres de combustion de ces moteurs pour poids lourds ont été ajustés. La phase euro 4 a conduit les constructeurs de moteurs poids lourds à opter pour les post-traitements des gaz d'échappement, c'est-à-dire les SCR (Selective Catalytic Reducer ou réducteur catalytique sélectif en français), les EGR (Exhaust Gas Recirculation ou recirculation de gaz d'échappement en français) et les FAP (filtres à particules). Ces divers post-traitements peuvent être installés seuls ou en combinaison dans la mesure où ils n'agissent pas toujours sur les mêmes polluants présents dans les gaz d'échappement.

La plupart des constructeurs européens de poids lourds ont opté pour le post-traitement SCR à l'échappement de leurs moteurs, ce post-traitement agissant exclusivement sur la diminution des oxydes d'azote présents dans les gaz, un autre avantage de cette technique étant qu'elle permet par des réglages optimisés du moteur une réduction sensible de la consommation du carburant.

Le post-traitement SCR consiste à réduire les NOx ou oxydes d'azote sur un catalyseur contenant du platine et du palladium, et en présence d'ammoniaque gazeux. Pour introduire de l'ammoniaque gazeux dans l'échappement, il est connu de le produire directement dans la conduite avant le SCR en vaporisant une solution aqueuse d'urée qui, placé à une température moyenne oscillant généralement de 200 à 400°C, se décompose progressivement en ammoniaque gazeux.

Dans certaines configurations d'installation du SCR et de l'injection d'urée, les constructeurs ont constaté l'apparition de dépôts dans les conduites d'échappement avant l'entrée du SCR. Ces dépôts peuvent être suffisamment importants pour provoquer une obturation partielle voire totale du conduit d'échappement et créer ainsi des pertes en puissance du moteur. A configuration d'injection constante, la quantité de dépôts formés est plus grande à basses températures qu'à hautes températures. Ces dépôts, selon les analyses qui ont été faites, sont constitués majoritairement d'acide cyanurique résultant de la décomposition incomplète de l'urée. Cet acide cyanurique peut se sublimer et produire à nouveau de l'ammoniaque gazeux ; cette réaction ne peut se produire qu'à très haute température, supérieure à 450°C, température rarement atteinte à cet endroit dans les conduites d'échappement

En outre, on a constaté que ces dépôts étaient présents dans les conduites présentant des coudes du fait du manque de place dans le véhicule, et dont la distance séparant l'injection d'urée et le premier coude est trop courte. L'hypothèse formulée est que dans ce type de configuration, une partie des gouttes d'urée n'a pas le temps de se vaporiser et de se décomposer totalement en ammoniaque gazeux. Elles se déposent sur la paroi du conduit qui est à une température trop « froide » pour permettre la décomposition complète en ammoniaque gazeux, et elles ne se décomposent que partiellement en formant des dépôts d'acide cyanurique collés à la paroi.

US 5489419 décrit un procédé pour diminuer les polluants générés lors de la combustion, plus particulièrement les NOx, par réduction sélective non-catalytique (SNCR), au moyen d'un agent réducteur des NOx, en général l'urée, en solution aqueuse. Afin d'augmenter la fiabilité de l'introduction de la solution d'urée dans la chambre de combustion, D1 propose d'ajouter un tensioactif à la solution aqueuse d'urée de manière à obtenir une pulvérisation d'urée dont la taille moyenne des gouttelettes est diminuée et leur distribution plus étroite qu'une pulvérisation d'urée sans tensioactif.

US 5645756 propose d'améliorer la fiabilité des appareils mis en contact avec des solutions aqueuses d'urée, préparées avec de l'eau présentant une dureté non négligeable, due à la présence d'ions calcium, magnésium, carbonate,... (cf. col. 3, lignes 13-49). Pour résoudre ce problème technique, D2 propose d'ajouter aux solutions aqueuses d'urée un composé pour supprimer la dureté de l'eau, choisi parmi les phosphonates hydrosolubles.

WO 00/75643 décrit une méthode pour contrôler la quantité d'une solution d'urée mise en oeuvre dans un système destiné à réduire les NOx, notamment dans un procédé de combustion avec réduction sélective catalytique (SCR). Cette méthode consiste à incorporer un traceur fluorescent dans la solution d'urée et à suivre l'évolution du signal en fonction du temps, ce traceur fluorescent pouvant par ailleurs avoir des propriétés tensioactives.

Aucun document de l'art antérieur ne mentionne la formation de dépôts hormis certains qui pour éviter de telle formation de dépôts, sans préciser leur nature, proposent de nouvelles structures d'injecteurs pour ces solutions.

### Brève description.

La présente invention propose donc l'utilisation d'une solution aqueuse comprenant une partie majeure d'un constituant susceptible de libérer de l'ammoniaque gazeux au dessus de 200°C et une partie mineure d'au moins un additif polyfonctionnel dont la HLB varie de 7 à 17 pour limiter la formation des dépots à base d'acide cyanurique dans les dispositifs SCR visant le post-traitement des gaz d'échappement, ledit additif polyfonctionnel étant choisi parmi les alcools polyalcoxylés ayant des groupements éthoxylés et/ou propoxylés. La solution aqueuse contient un composé susceptible de se décomposer en ammoniaque gazeux qui se vaporise facilement à l'injection et qui limite fortement les dépôts d'acide cyanurique sur les parois « froides ».

Selon un mode préféré, la solution comprend de 15 à 40 % d'au moins un constituant se décomposant en ammoniaque gazeux et plus de 10 ppm, de préférence plus de 100 ppm dudit au moins un additif polyfonctionnel.

Selon un mode préféré, la solution comprend de 100 à 5000 ppm dudit au moins un additif polyfonctionnel, de préférence de 500 à 1000 ppm.

Selon un mode préféré, le dit constituant est choisi parmi l'urée et ses dérivés.

Selon un mode préféré, les additifs sont choisis parmi les alcools gras linéaires ou ramifiés polyalcoxylés comprenant des chaînes carbonées de 3 à 40 atomes de carbone et de 5 à 10 motifs alcoxylés et présentant une HLB variant de 10 à 15.

Selon un autre objet, l'invention vise un procédé SCR de post-traitement des gaz d'échappement comprenant la vaporisation à une température comprise entre 200 et 400°C d'une solution aqueuse comprenant une partie majeure d'un constituant susceptible de libérer de l'ammoniaque gazeux au dessus de 200°C et une partie mineure d'au moins un additif polyfonctionnel dont la HLB varie de 7 à 17, ledit additif polyfonctionnel étant choisi parmi les alcools polyalcoxylés ayant des groupements éthoxylés et/ou propoxylés.

De préférence dans le procédé selon l'invention la solution aqueuse est telle que définie précédement.

### Description détaillée.

La présente invention a donc pour objet l'utilisation d'une solution aqueuse pour limiter la formation des dépots à base d'acide cyanurique dans tout dispositif de pulvérisation visant le post- traitement des gaz d'échappement comprenant une partie majeure d'un composant susceptible de libérer de l'ammoniaque gazeux par augmentation de la température et une partie mineure d'au moins un composé tensioactif dont la HLB varie de 7 à 17, ledit additif polyfonctionnel étant choisi parmi les alcools polyalcoxylés ayant des groupements éthoxylés et/ou propoxylés.

Par HLB on entend la balance hydrophile/lipophile du dit additif utilisé.

Cette solution aqueuse est particulièrement avantageuse car les gouttelettes de solution étant mieux dispersées du fait de ses caractéristiques de mouillabilité et de tension superficielle améliorée par rapport aux solutions de l'art antérieur, elles se vaporisent et se décomposent plus facilement en ammoniaque gazeux avant d'atteindre la paroi « froide ».

Dans un mode préféré de l'invention, la solution comprend de 15 à 40 % d'au moins un constituant se décomposant en ammoniaque gazeux et plus de 10 ppm, de préférence plus de 100 ppm, et avantageusement d'au moins un additif polyfonctionnel.

Pour obtenir des efficacités suffisantes, par exemple une diminution de plus de 50% au moins des dépôts, la solution comprend de 100 à 5000 ppm, et avantageusement de 500 à 1000 ppm d'au moins un additif polyfonctionnel.

Dans le cadre de la présente invention le dit constituant est choisi parmi l'urée et ses dérivés.

Pour obtenir une diminution des dépôts, l'additif polyfonctionnel est choisi de préférence parmi les tensioactifs neutres ou non-ioniques choisis parmi les alcools gras linéaires ou ramifiés polyalcoxylés comprenant des chaînes carbonées de 3 à 40 atomes de carbone et de 5 à 10 motifs alcoxylés et présentant une HLB variant de 10 à 15.

La solution aqueuse peut contenir un ou plusieurs autres additifs que les additifs polyfonctionnels tels que définis ci-dessus, tels que par exemple agents anti-mousse (alcools, alcènes associés à un ou plusieurs tensioactifs non-ioniques, ....), co-solvants destinés à favoriser la dissolution du ou des tensioactifs dans la solution aqueuse.

La solution aqueuse est préparée de manière usuelle par mélange de ses constituants, de préférence à température ambiante, typiquement dans une plage de température allant en générale de 10 à 60 °C.

Les additifs polyfonctionnels solubles dans l'eau, plus particulièrement à température ambiante, sont en général préférés.

Pour des raisons de rapidité de mélange des constituants de la solution aqueuse, on préfère éviter les composants pâteux et/ou solides.

De manière préférée, les solutions aqueuses répondent à la norme ISO 2241-1 pour ce qui concerne les quantités indiquées dans le tableau 1 de ladite norme : aldéhydes, matière insoluble, phosphate, calcium, fer, cuivre, zinc, chrome, nickel, aluminium, sodium, potassium, et d'une manière générale ne contiennent pas tout élément et/ou composant en quantité telle qu'il est susceptible d'être un poison du catalyseur SCR.

Un mode de réalisation de l'invention est l'utilisation de la solution aqueuse dans les dispositifs SCR visant le post-traitement des gaz d'échappement.

Les exemples ci-après sont donnés en vue d'illustrer les caractéristiques de l'invention mais non d'en limiter sa portée.

### EXEMPLE I

Le présent exemple vise à montrer l'influence de l'ajout d'un additif et de la concentration de celui-ci sur la diminution des dépôts sur parois froides.

Des solutions aqueuses référencées Sᵢ, contenant de l'urée à 32,5% dans l'eau et des concentrations croissantes en additifs B jusqu'à T, ont été préparées : elles sont décrites dans le tableau I ci-après.
B est un alcool gras polyéthoxylé comprenant 7,5 groupements éthoxylés sur une chaîne carbonée de 27 carbones, de HLB égal à 13,5 commercialisé par CECA S.A.
C est un triglycéride polyéthoxylé comprenant 30 motifs éthoxylés pour une HLB de 12. Il est pâteux à température ambiante et nécessite un chauffage à 40°C avant mise en solution en milieu aqueux.
D est un mélange d'alcools, d'alcènes et de tensio-actifs non ioniques.
E est un mélange d'amines, d'alkyles en C12-18 diméthyles et de N-oxydes.
F est de l'octane-1-sulfonate de sodium, monohydrate.
G est un mélange de polyéthylène glycol, polypropylène glycol, ether monobutylique. Il est très pâteux à température ambiante.
H est un mélange d'alcools en C10-12 éthoxylés et propoxylés.
I est une diethanolamide de coco.
J est un mélange d'alkyl phosphate, d'octane-l-ol, et de décane-1-ol.
K est un mélange d'acide phosphorique, d'ester de butyle, et de sel de potassium.
L est du dioctyl sulfosuccinate de sodium.
M est de l'huile de ricin éthoxylée contenant 20 motifs éthoxylés, de HLB égal à 10.
N est un triglycéride éthoxylé contenant 30 motifs éthoxylés, de HLB égal à 11.8.
O est de l'huile de castor éthoxylée contenant 40 motifs éthoxylés, de HLB égal à 13. Il est pâteux à température ambiante.
P est un mélange d'alcools en C12-C14 éthoxylé contenant 10 motifs éthoxylés, de HLB égal à 11.3.
Q est une huile de canola éthoxylée contenant 30 motifs éthoxylés, de HLB égal à 11.3.
R est un triglycéride éthoxylé contenant 60 motifs éthoxylés. Il est pâteux à température ambiante.
S est un polyéther aliphatique avec des groupements acides.
T est un mélange de copolymère, alcool éthoxylé maléate et alpha-oléfines.

**TABLEAU I**

| Solution aqueuse | S₀ | S₁ | S₂ | S₃ | S₄ | S₅ | S₆ |
|---|---|---|---|---|---|---|---|
| Tensioactif B à T (ppm) | 0 | 10 | 50 | 100 | 500 | 1000 | 5000 |

Ces solutions aqueuses d'urée, additivées ou non sont utilisées sur un moteur au banc représentatif d'une utilisation urbaine (bus ou benne à ordures ménagères) dans des conditions optimisées en température afin de favoriser la production de dépôt. On entend des températures comprises entre 250 et 320°C.

Les diminutions de dépôts observées dues à la présence d'additifs sont rassemblées dans le tableau II suivant.

**TABLEAU II**

| Diminution (en %) des dépôts avec additifs testés (seuls et en mélanges) | | | | | | | |
|---|---|---|---|---|---|---|---|
| Solution aqueuse | S0 | S1 | S2 | S3 | S4 | S5 | S6 |
| Concentration Additif (ppm) | 0 | 10 | 50 | 100 | 500 | 1000 | 5000 |
| B | | | | 50 | 75 | 80 | 85 |
| C | | | | - | 69 | 79 | - |
| D | | | | - | 55 | 58 | - |
| E | | | | - | - | 13 | - |
| F | | | | - | - | 21 | - |
| G | | | | - | - | 61 | - |
| H | | | | - | - | 46 | - |
| I | | | | - | - | 46 | - |
| J | | | | - | - | 46 | - |
| K | | | | - | | 32 | - |
| L | | | | - | - | 64 | - |
| M + 150 ppm D | | | | - | 63 | - | - |
| N + 150 ppm D | | | | - | 63 | - | - |
| O + 150 ppm D | | | | - | 55 | - | - |
| P + 150 ppm D | | | | - | 72 | - | - |
| Q | | | | - | 49 | 53 | - |
| R + 150 ppm D | | | | | 54 | | |
| S + 150 ppm D | | | | - | 24 | - | - |
| T + 150 ppm D | | | | - | 29 | - | - |

On constate que l'utilisation d'additif polyfonctionnel permet de diminuer les dépôts dans tous les cas avec une plus ou moins grande efficacité. Les additifs polyfonctionnels selon l'invention (spécifiquement les solutions B et P) permettent d'atteindre des niveaux de dépôts très faibles (jusqu'à 80% de diminution du dépôt).

Pour les exemples réunis dans le tableau II, on constate que les dépôts sont diminués de plus de 50 % dès que la teneur en additifs est supérieure ou égale à 100 ppm. D'autre part, à une concentration de 1000 ppm, on note qu'on atteint la concentration à laquelle l'efficacité de l'additif est optimale.

### EXEMPLE II

Le présent exemple décrit l'influence de l'additivation sur la tension superficielle des gouttes de la solution aqueuse.

Les résultats des tensions superficielles mesurées pour les différentes solutions S*i* sont donnés en mN/m (milliNewton/mètre) dans le tableau III ci-dessous.

**TABLEAU III**

| Solution aqueuse | S₀ | S₁ | S₂ | S₃ | S₄ | S₅ | S₆ |
|---|---|---|---|---|---|---|---|
| Concentration Additif (ppm) | 0 | 10 | 50 | 100 | 500 | 1000 | 5000 |
| B | 73,3 | 59,0 | 48,7 | 39,1 | 27,2 | 26,1 | 26,6 |
| C | 73,3 | 49,1 | 53,4 | 49,3 | 46,6 | 45,4 | - |
| D | 73,3 | 66,1 | 53,3 | 43 | 38,7 | 34,3 | 33,3 |
| E | 73,3 | - | - | - | 44,2 | 57,7 | - |
| F | 73,3 | - | - | - | 69,1 | 51,9 | - |
| G | 73,3 | - | - | - | 41 | 40,3 | - |
| H | 73,3 | - | - | - | 32,9 | 33,6 | - |
| I | 73,3 | - | - | - | 49,8 | 49,7 | - |
| J | 73,3 | - | - | - | 24,6 | 24,3 | - |
| K | 73,3 | - | - | - | 65,8 | 65,3 | - |
| L | 73,3 | - | - | - | 37,4 | 32,6 | - |
| M | 73,3 | - | - | - | 43,2 | 42,4 | - |
| N | 73,3 | - | - | - | 43,4 | 42,3 | - |
| O | 73,3 | - | - | - | 44,2 | 42,4 | - |
| P | 73,3 | - | - | - | 47,8 | 47 | - |
| Q | 73,3 | - | - | - | 32,8 | 33,3 | - |
| R | 73,3 | - | - | - | 44,7 | 43,8 | - |
| S | 73,3 | - | - | - | 53,8 | 48,8 | - |
| T | 73,3 | - | - | - | 57,1 | 53,1 | - |

On peut remarquer que la quantité de dépôts formés à l'échappement décroît avec la diminution de la tension superficielle de la solution d'urée additivée et dépend de sa concentration en additif, d 'autre part, à partir de 500 ppm, la tension de surface atteint une valeur asymptotique, c 'est pourquoi, pour les additifs E à T, seules les concentrations à 500 et 1000 ppm ont été étudiées.

### EXEMPLE III

La distribution de taille des gouttes dans le spray d'urée a été étudiée par diffraction laser, Il ressort de cette étude que la distribution de taille mesurée dans le spray n'est pas influencée par la présence d'additif tensio-actif (mesure sur le diamètre équivalent moyen « SMD mid » et sur le diamètre « Dv90 »).

## Revendications

1. Utilisation d'une solution aqueuse comprenant une partie majeure d'un constituant susceptible de libérer de l'ammoniaque gazeux au-dessus de 200°C et une partie mineure d'au moins un additif polyfonctionnel dont la HLB varie de 7 à 17 pour limiter la formation des dépôts à base d'acide cyanurique dans les dispositifs SCR pour le post-traitement des gaz d'échappement, ledit additif polyfonctionnel étant choisi parmi les alcools polyalcoxylés ayant des groupements éthoxylés et/ou propoxylés.

2. Utilisation d'une solution selon la revendication 1 **caractérisée en ce qu'**elle comprend de 15 à 40 % d'au moins un constituant se décomposant en ammoniaque gazeux et plus de 10 ppm, de préférence plus de 100 ppm dudit au moins un additif polyfonctionnel.

3. Utilisation d'une solution selon l'une quelconque des revendications 1 et 2 **caractérisée en ce qu'**elle comprend de 100 à 5000 ppm dudit au moins un additif polyfonctionnel.

4. Utilisation d'une solution selon l'une quelconque des revendications 1 à 3 **caractérisée en ce que** le dit constituant est choisi parmi l'urée et ses dérivés.

5. Utilisation selon l'une quelconque des revendications 1 à 4, **caractérisée en ce que** les alcools polyalcoxylés sont choisis parmi les alcools gras linéaires ou ramifiés polyalcoxylés comprenant des chaînes carbonées de 3 à 40 atomes de carbone et de 5 à 10 motifs alcoxylés et présentant une HLB variant de 10 à 15.

6. Procédé SCR de post-traitement des gaz d'échappement comprenant la vaporisation à une température comprise entre 200 et 400°C d'une solution aqueuse comprenant une partie majeure d'un constituant susceptible de libérer de l'ammoniaque gazeux au-dessus de 200°C et une partie mineure d'au moins un additif polyfonctionnel dont la HLB varie de 7 à 17, ledit additif polyfonctionnel étant choisi parmi les alcools polyalcoxylés ayant des groupements éthoxylés et/ou propoxylés.

7. Procédé selon la revendication 6 dans lequel la solution aqueuse est telle que définie dans l'une quelconque des revendications 2 à 5.

## Patentansprüche

1. Verwendung einer wässrigen Lösung, umfassend einen großen Teil eines Bestandteils, der geeignet ist, gasförmiges Ammoniak über 200°C freizusetzen, und einen kleinen Teil mindestens eines polyfunktionalen Zusatzstoffes, dessen HLB von 7 bis 17 variiert, um die Bildung der Ablagerungen auf Basis von Cyanursäure in den Vorrichtungen SCR für die Nachbehandlung der Abgase zu begrenzen, wobei der polyfunktionale Zusatzstoff unter den Polyalcoxylalkoholen mit Ethoxyl- und/oder Propoxylgruppen ausgewählt ist.

2. Verwendung einer Lösung nach Anspruch 1, **dadurch gekennzeichnet, dass** sie 15 bis 40 % mindestens eines Bestandteils umfasst, der sich in gasförmiges Ammoniak und mehr als 10 ppm, vorzugsweise mehr als 100 ppm, des mindestens einen polyfunktionalen Zusatzstoffes aufgliedert.

3. Verwendung einer Lösung nach einem der Ansprüche 1 und 2, **dadurch gekennzeichnet, dass** sie 100 bis 5000 ppm des mindestens einen polyfunktionalen Zusatzstoffes umfasst.

4. Verwendung einer Lösung nach einem der Ansprüche 1 bis 3, **dadurch gekennzeichnet, dass** der Bestandteil unter Harnstoff und seinen Derivaten ausgewählt ist.

5. Verwendung nach einem der Ansprüche 1 bis 4, **dadurch gekennzeichnet, dass** Polyalcoxylalkohole unter den linearen oder verzweigten Polyalcoxylalkoholen ausgewählt sind, umfassend Kohlenstoffketten mit 3 bis 40 Kohlenstoffatomen und 5 bis 10 Alcoxylmotiven und einen HLB von 10 bis 15.

6. SCR-Verfahren zur Nachbehandlung der Abgase, umfassend die Verdampfung bei einer Temperatur zwischen 200 und 400 °C einer wässrigen Lösung, umfassend einen großen Teil eines Bestandteils, der geeignet ist, gasförmiges Ammoniak über 200 °C freizusetzen, und einen kleinen Teil mindestens eines polyfunktionalen Zusatzstoffes, dessen HLB von 7 bis 17 variiert, wobei der polyfunktionale Zusatzstoff unter den Polyalcoxylalkoholen mit Ethoxyl- und/oder Propoxylgruppen ausgewählt ist.

7. Verfahren nach Anspruch 6, bei dem die wässrige Lösung wie in einem der Ansprüche 2 bis 5 definiert ist.

## Claims

1. Use of an aqueous solution comprising as a majority part, a constituent capable of releasing gaseous ammonia above 200°C and as a minority part, at least one multi-functional additive, the HLB of which varies from 7 to 17, for limiting the formation of deposits based on cyanuric acid in SCR devices for the after-treatment of exhaust gases, said multi-functional additive being selected from polyalkoxylated alcohols having ethoxylated and/or propoxylated groups.

2. Use of a solution according to claim 1, **characterized in that** it comprises 15 to 40% of at least one constituent which decomposes to gaseous ammonia and more than 10 ppm, preferably more than 100 ppm, of said at least one multi-functional additive.

3. Use of a solution according to one of claims 1 and 2, **characterized in that** it comprises 100 to 5000 ppm of said at least one multi-functional additive.

4. Use of a solution according to one of claims 1 to 3, **characterized in that** said constituent is chosen from urea and its derivatives.

5. Use of a solution according to one of claims 1 to 4, **characterized in that** the additives are chosen from polyalkoxylated linear or branched fatty alcohols comprising carbonated chains of 3 to 40 carbon atoms and 5 to 10 alkoxylated units and having an HLB varying from 10 to 15.

6. SCR process for the after-treatment of exhaust gases comprising vaporization at a temperature comprised between 200 and 400°C of an aqueous solution comprising as a majority part, a constituent capable of releasing gaseous ammonia above 200°C and as a minority part, at least one multi-functional additive, the HLB of which varies from 7 to 17, said multi-functional additive being selected from polyalkoxylated alcohols having ethoxylated and/or propoxylated groups.

7. Process according to claim 6 in which the aqueous solution is as defined in one of claims 2 to 5.
